# EUROPEAN PATENT APPLICATION

(11) **EP 4 501 757 A1**
(43) Date of publication of application: **05.02.2025**
(21) Application number: 23815724.2
(22) Date of filing: 12.05.2023
(51) Int. Cl.: B62D 25/20, B60K 1/04, B62D 21/15

(54) **VEHICLE BODY LATERAL SECTION STRUCTURE**

(30) Priority: 03.06.2022 JP 2022090635
(71) Applicant: JFE Steel Corporation, Tokyo 100-0011 (JP); Suzuki Motor Corporation, Shizuoka 432-8611 (JP)
(72) Inventor: SAITO, Takanobu, Tokyo 100-0011 (JP); TSURU, Shotaro, Hamamatsu-shi, Shizuoka 432-8611 (JP); KURIAGE, Yoshitaka, Hamamatsu-shi, Shizuoka 432-8611 (JP)
(74) Representative: Haseltine Lake Kempner LLP
(86) International application number: PCT/JP2023/017856
(87) International publication number: WO 2023/233964

(57) **Abstract**

The automotive body side structure 1 of the present invention includes collision energy absorptive parts 11 provided on the outer peripheral side of the battery pack 5 in the vehicle width direction in a protruding shape toward a vehicle outside in the vehicle width direction, and a recessed portion 13 formed in a recessed shape in the side sill 3 to secure a space between the collision energy absorptive parts 11 and the side sill 3. When a collision load is input to the side portion of the side sill 3, the timing at which the side sill 3 and the collision energy absorptive parts 11 contact each other is delayed, the collision load input to the side sill 3 is transferred to the floor cross member 7 until the side sill 3 contacts the collision energy absorptive parts 11, after the side sill 3 and the collision energy absorptive parts 11 contact each other, the collision energy absorptive parts 11 absorb the collision energy to reduce a load transferred to the battery pack 5.

## Description

### Field

The present invention relates to an automotive body side structure of a battery powered vehicle (battery electric vehicle) including a battery pack disposed vehicle inside in a vehicle width direction relative to a side sill.

### Background

In recent years, particularly in the automobile industry, due to environmental problems, replacement from a gasoline engine car to a battery powered vehicle or the like is in progress. In a battery powered vehicle or the like, a battery pack accommodating a large battery is disposed on a floor portion of a lower part of a vehicle body. In addition, since a lithium (Li) based material is often used for the battery, when the battery pack is damaged at the time of a collision and liquid leakage from the battery occurs, there is a possibility of fire, and thus a structure for protecting the battery pack is required. A side sill is provided to protect the battery pack, and the battery pack is disposed between the side sills on both sides of the vehicle body.

In general, as disclosed in Patent Literature 1, for example, a side sill of a battery powered vehicle or the like has a shape in which the inside of the side sill is straight and has no concave/convex shape, as in a conventional vehicle body. However, the shape of the side sill is important from the viewpoint of a structure for protecting the battery pack. For this reason, for example, Patent Literature 2 discloses a technique in which, in a side sill including a hat-shaped section part having a hat-shaped cross section including a top portion, two side walls (vertical walls), and two flange portions in a cross section perpendicular to the longitudinal direction, a plurality of groove portions extending in a direction perpendicular to the longitudinal direction is provided in the side wall, so that a load required for deformation of the side sill is increased at the time of a side collision (side impact collision) of an automobile, whereby high energy absorption efficiency is exhibited and a battery is protected.

### Citation List

### Patent Literature

Patent Literature 1: JP 6928719 B
Patent Literature 2: JP 6703322 B

### Summary

### Technical Problem

However, in the technique disclosed in Patent Literature 2, since a plurality of grooves is provided in the side wall of the hat-shaped section part, when a collision load is input from the vehicle outside in the vehicle width direction, the side wall is easily deformed into a bellows-shaped shape. As a result, the deformation amount of the side sill toward vehicle inside in the vehicle width direction is large, and a large load is input to the battery pack to cause deformation, so that the battery cannot be protected in some cases. Therefore, it has been required to reduce the load and deformation input to the battery pack due to the deformation of the side sill at a time of a side collision of the battery powered vehicle or the like.

The present invention has been made to solve the above problems, and an object thereof is to provide an automotive body side structure capable of reducing a load and deformation input to a battery pack due to deformation of a side sill at a time of a side collision of a battery powered vehicle or the like.

### Solution to Problem

An automotive body side structure according to the present invention includes: a side sill disposed at a vehicle outside in a vehicle width direction of a vehicle body and extending in a vehicle length direction; a battery pack disposed at a lower part of the vehicle body vehicle inside in the vehicle width direction relative to the side sill; and a floor cross member extending in the vehicle width direction and having a vehicle outside end portion in the vehicle width direction connected to the side sill, wherein a steel sheet used for the side sill has a tensile strength of 980 MPa-class or higher, the automotive body side structure includes collision energy absorptive parts provided in a protruding shape toward the vehicle outside in the vehicle width direction on an outer peripheral side in the vehicle width direction of the battery pack, the collision energy absorptive parts being configured to absorb collision energy when a collision load is input to the side sill from the vehicle outside in the vehicle width direction, and a recessed portion having a recessed shape at a vehicle inner side of the side sill in the vehicle width direction, the recessed shape being recessed toward the vehicle outside in the vehicle width direction in accordance with a protruding shape of the collision energy absorptive parts so as to secure a space between the collision energy absorptive parts and the side sill, the collision energy absorptive parts and the recessed portion are provided along the side sill over an entire length of or a partial length of the vehicle length direction, and when a collision load is input to the side sill from the vehicle outside in the vehicle width direction, the space between the side sill and the battery pack delays a timing at which the side sill and the collision energy absorptive parts come into contact with each other, and before the side sill and the collision energy absorptive parts come into contact with each other, the collision load input to the side sill is transferred to the floor cross member, and after the side sill and the collision energy absorptive parts come into contact with each other, the collision energy absorptive parts absorb the collision energy to reduce a load transferred to the battery pack.

The recessed portion may be formed in a region of 1/2 or less of the side sill in the vehicle body height direction at a vehicle inner side in the vehicle width direction.

A depth of the recessed portion in the vehicle width direction may be 50 mm or less.

### Advantageous Effects of Invention

According to the present invention, at a time of a side collision in which a collision load is input to the side sill from the vehicle outside in the vehicle width direction, it is possible to transfer the load to the floor cross member until the side sill comes into contact by delaying the timing at which the side sill comes into contact with the battery pack by the space secured between the collision energy absorptive parts and the recessed portion formed in the side sill, and after the side collision progresses and the side sill comes into contact with the collision energy absorptive parts, the collision energy absorptive parts can absorb the collision energy. As a result, it is possible to protect the battery pack from damage by reducing the load input to the battery pack and suppressing deformation, and to make a safe vehicle.

### Brief Description of Drawings

FIG. 1 is a diagram illustrating an automotive body side structure according to an embodiment of the present invention.
FIG. 2 is a diagram for describing a side collision of a vehicle body to be analyzed in the example.
FIG. 3 is a diagram illustrating a method of evaluating a deformation amount of a battery pack and an input load to the battery pack in the example ((a) Evaluation position of deformation amount of battery pack, (b) Input load to battery pack).
FIG. 4 is a cross-sectional view of an automotive body side structure according to a Comparative Example to be compared in the example.
FIG. 5 is a diagram illustrating an automotive body side structure according to a Conventional Example to be compared in the example.
FIG. 6 is a graph illustrating a result of a deformation amount of a battery pack in the example.
FIG. 7 is a graph illustrating a result of a contact reaction force obtained as an input load to a battery pack in the example.
FIG. 8 is a diagram illustrating a deformation state in a side collision process of the automotive body side structure according to the Conventional Example and the Invention Example in the example ((a) Conventional Example, (b) Invention Example).

### Description of Embodiments

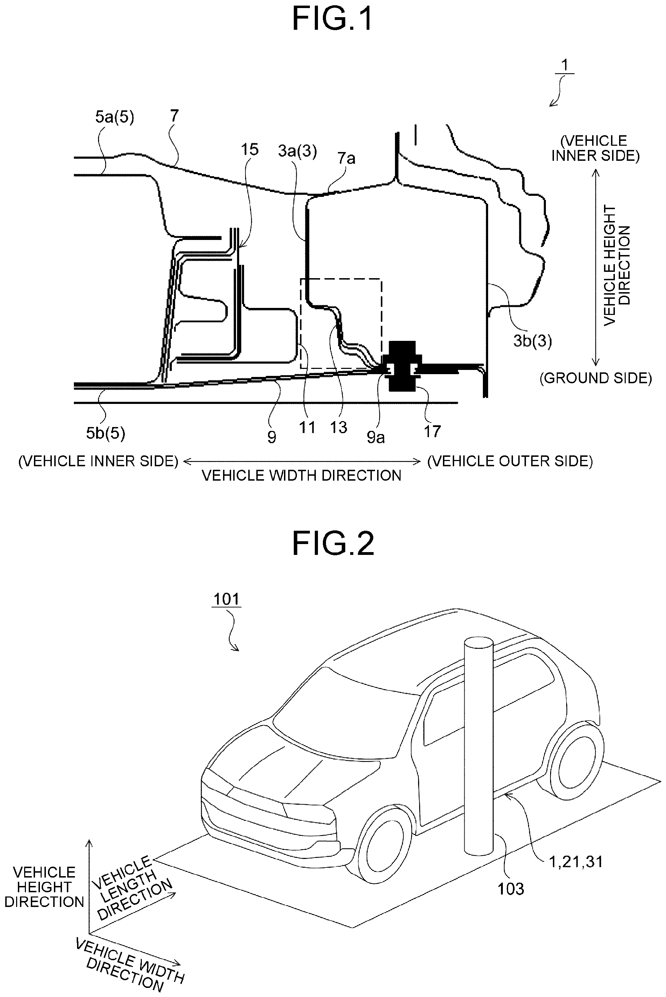

As illustrated in FIG. 1, an automotive body side structure 1 according to the embodiment of the present invention includes a side sill 3 extending in the vehicle length direction, a battery pack 5 disposed vehicle inside in the vehicle width direction relative to the side sill 3, a floor cross member 7 extending in the vehicle width direction and having a vehicle outside end portion 7a in the vehicle width direction connected to the side sill 3, and a ground side cross member 9. The automotive body side structure 1 according to the embodiment of the present invention has a steel sheet used for the side sill 3 having a tensile strength of 980 MPa-class or more, and includes collision energy absorptive parts 11 provided on the outer peripheral side in the vehicle width direction of the battery pack 5 and a recessed portion 13 formed at the vehicle inner side of the side sill 3 in the vehicle width direction. Hereinafter, an automotive body side structure 1 according to the present embodiment will be described with reference to FIG. 1. In the present specification and the drawings, elements having the same functional configuration are denoted by the same reference numerals, and redundant description will be omitted.

As illustrated in FIG. 1, the side sill 3 includes a side sill inner 3a having a groove shape that opens toward the vehicle outside in the vehicle width direction, and a side sill outer 3b having a groove shape that opens toward vehicle inside in the vehicle width direction. The side sill inner 3a and the side sill outer 3b face each other on the opening sides, and a vehicle body upper side end portion and a vehicle body lower side end portion are joined to form a closed cross section structure.

The battery pack 5 has a battery cell (not illustrated) mounted therein, and includes a battery pack upper 5a and a battery pack lower 5b. The battery pack 5 is supported by a battery frame assembly 15 disposed on the outer peripheral side in the vehicle width direction. In the present embodiment, as illustrated in FIG. 1, the battery frame assembly 15 includes a plurality of steel sheet parts.

The floor cross member 7 is disposed above the battery pack 5 in the vehicle, and a vehicle outside end portion 7a in the vehicle width direction is connected to the upper part of the side sill inner 3a.

The ground side cross member 9 is disposed below the battery pack 5 in the vehicle body, and a vehicle outside end portion 9a in the vehicle width direction is fastened to the lower part of the side sill 3 with a bolt 17.

The collision energy absorptive parts 11 are provided in a protruding shape toward the vehicle outside in the vehicle width direction on the outer peripheral side in the vehicle width direction of the battery pack 5, and absorbs collision energy when a collision load is input to the side sill 3 from the vehicle outside in the vehicle width direction.

The recessed portion 13 has a recessed shape at the vehicle inner side of the side sill 3 in the vehicle width direction, the recessed shape being recessed toward the vehicle outside in the vehicle width direction in accordance with a protruding shape of the collision energy absorptive parts 11. As a result, a predetermined space is secured between the collision energy absorptive parts 11 and the side sill 3.

Then, when the collision load is input to the side sill 3 from the vehicle outside in the vehicle width direction, the automotive body side structure 1 delays the timing at which the side sill 3 and the collision energy absorptive parts 11 come into contact with each other because the space between the collision energy absorptive parts 11 and the recessed portion 13 of the side sill 3 is secured. Before the side sill and the collision energy absorptive parts come into contact with each other, the collision load input to the side sill 3 is transferred to the floor cross member 7 and the ground side cross member 9, and after the side sill 3 and the collision energy absorptive parts 11 come into contact with each other, the collision energy absorptive parts 11 absorb the collision energy to reduce a load transferred to the battery pack 5. As a result, deformation of the battery pack 5 can be suppressed, and the battery in the battery pack 5 can be protected.

The recessed portion 13 may be formed in a region of 1/2 or less of the side sill 3 in the vehicle body height direction at a vehicle inner side in the vehicle width direction (in a broken-line frame in FIG. 1). This makes it possible to secure a space with the collision energy absorptive parts 11 without impairing the function of the side sill 3 even when the recessed portion 13 is formed.

Further, the depth of the recessed portion 13 in the vehicle width direction is preferably 50 mm or less. Thus, the side sill inner 3a can have the recessed portion 13 while securing the function of the side sill 3.

Further, the collision energy absorptive parts 11 and the recessed portion 13 may be provided over the entire length of the side sill along the vehicle length direction of the side sill 3, or may be provided over a partial length along the vehicle length direction. In the case of being provided over a partial length along the vehicle length direction, the region may be a region into which a pole advances in the entire length.

In addition, in the automotive body side structure according to the present invention, from the viewpoint of securing the function (stiffness), collision energy absorption capacity (impact energy absorption capacity), and the like of the side sill, the tensile strength of the steel sheet used for the side sill is set to 980 MPa-class or more, and for example, a steel sheet having tensile strengths of 980 MPa-class, 1180 MPa-class, 1370 MPa-class, 1470 MPa-class, or 1760 MPa-class can be used.

As illustrated in FIG. 1, the automotive body side structure 1 according to the present embodiment includes a battery frame assembly 15, and the collision energy absorptive parts 11 are provided on the outer peripheral face in the vehicle width direction of the battery frame assembly 15. However, the automotive body side structure according to the present invention may not include the battery frame assembly. In this case, the collision energy absorptive parts may be provided on the outer peripheral face of the battery pack in the vehicle width direction.

In the automotive body side structure 1 according to the present embodiment, the floor cross member 7 is disposed above the battery pack 5, and the ground side cross member 9 is disposed blow the battery pack 5. However, in the present invention, only the floor cross member may be disposed. Even in this case, when the collision load is input from the vehicle outside in the vehicle width direction of the side sill, the collision load input to the side sill is dispersed in the floor cross member until the side sill comes into contact with the collision energy absorptive parts, and after the side sill comes into contact with the collision energy absorptive parts, the collision energy is absorbed by the collision energy absorptive parts. Therefore, the load transferred to the battery pack can be reduced, and deformation of the battery pack can be suppressed.

### Examples

Since a specific analysis for verifying the operation and effect of the automotive body side structure according to the present invention was performed, the results thereof will be described below.

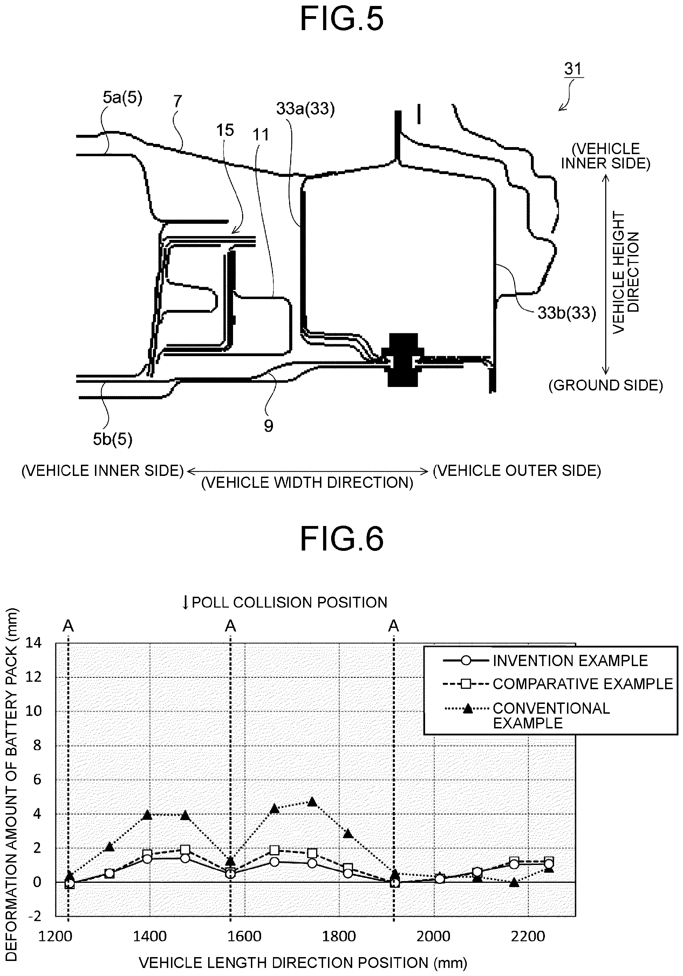

In the present example, side collision analysis (side impact analysis) for causing a pole 103 to collide with a vehicle 101 from the vehicle outside in the vehicle width direction as illustrated in FIG. 2, the vehicle including the automotive body side structure 1 (Invention Example) including the side sill 3, the battery pack 5, the floor cross member 7, and the ground side cross member 9 and including the collision energy absorptive parts 11 and the recessed portion 13 (depth 20 mm) illustrated in FIG. 1 in the above-described embodiment. Four sets of the floor cross member 7 and the ground side cross member 9 were disposed at corresponding positions in the vehicle height direction with an interval of 348 mm in the vehicle length direction in a range of 1044 mm (position "A" in FIG. 6). In addition, the collision energy absorptive parts 11 and the recessed portion 13 were provided over a range where the floor cross member 7 and the ground side cross member 9 were disposed along the vehicle length direction of the side sill 3 (position of "A" in FIG. 6).

In the side collision analysis, the vehicle 101 was accelerated to 29 km/h in the vehicle width direction, and collided with the pole 103 which is a rigid body with respect to the side face of the vehicle 101. Then, when the pole 103 collides with the side face of the vehicle 101, the side sill 3 (see FIG. 1) is locally deformed and advance inside the vehicle. In the present example, the deformation amount of the battery pack 5 in the side collision process and the load input to the battery pack 5 were evaluated.

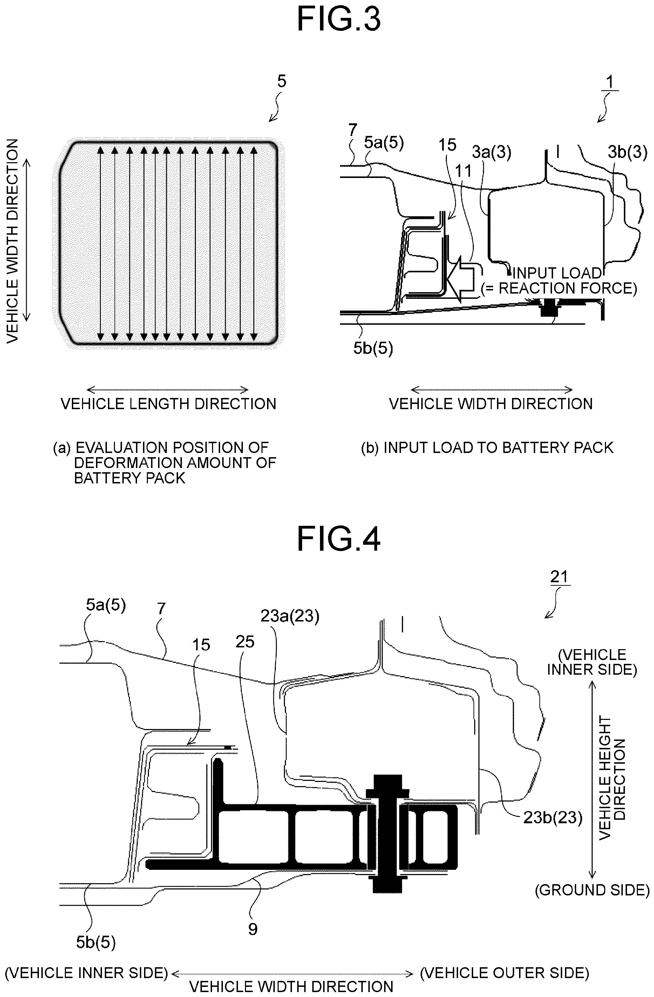

As for the deformation amount of the battery pack 5 (see FIG. 1), as illustrated in FIG. 3(a), lengths in the vehicle width direction of the battery pack 5 before and after deformation were measured at a plurality of positions in the vehicle length direction (positions indicated by arrows in FIG. 3(a)), and a difference between before and after deformation was obtained. On the other hand, with respect to the load input to the battery pack 5, as illustrated in FIG. 3(b), the reaction force (contact reaction force) generated in the battery frame assembly 15 by the contact of the collision energy absorptive parts 11 with the side sill inner 3a in the collision process was obtained.

In the present example, as a comparison target, the side collision test illustrated in FIG. 2 was also performed on an automotive body side structure 21 (Conventional Example) illustrated in FIG. 4 and an automotive body side structure 31 (Comparative Example) illustrated in FIG. 5 in the same manner as in the Invention Example, and the deformation amount of the battery pack 5 in the side collision process and the load input to the battery pack 5 were evaluated.

As illustrated in FIG. 4, the automotive body side structure 21 according to the Conventional Example includes a side sill 23 having a side sill inner 23a and a side sill outer 23b, and a lower part of the side sill 23 and the battery frame assembly 15 are connected by a connecting member 25 made of aluminum.

On the other hand, as illustrated in FIG. 5, the automotive body side structure 31 according to the Comparative Example includes a side sill 33 having a side sill inner 33a and a side sill outer 33b, and the battery frame assembly 15 is provided with the collision energy absorptive parts 11, but the recessed portion is not formed at the vehicle inner side of the side sill 33.

The deformation amount of the battery pack 5 in the Conventional Example and the Comparative Example was obtained in the same manner as in the Invention Example (see FIG. 3). On the other hand, the load input to the battery pack 5 in the Conventional Example is obtained by the contact reaction force between the connecting member 25 and the battery frame assembly 15, and the load input to the battery pack 5 in the Comparative Example is obtained by the contact reaction force with the battery frame assembly 15 generated by the contact of the collision energy absorptive parts 11 with the side sill inner 33a as in the Invention Example.

FIG. 6 illustrates an analysis result of the deformation amount at each position in the vehicle length direction of the battery pack 5 in the Invention Example, the Conventional Example, and the Comparative Example. A of FIG. 6 illustrates positions in the vehicle length direction where the floor cross member 7 and the ground side cross member 9 are disposed. FIG. 6 illustrates a result when the position where the pole 103, which is a rigid body, collides with the side face of the vehicle 101 is set to the position (=1568 mm) in the vehicle length direction where the floor cross member 7 and the ground side cross member 9, and the collision energy absorptive parts 11 and the recessed portion 13 are disposed, and the diameter of the pole 103 is set to 254 mm.

The deformation amount of the battery pack 5 in the Invention Example was smaller than that in the Conventional Example and the Comparative Example at any position in the vehicle length direction. The average value of the deformation amounts of the battery packs 5 at the four positions in the vehicle length direction (A of FIG. 6) where the floor cross member 7 and the ground side cross member 9 were disposed was 0.76 mm in the Conventional Example and 0.42 mm in the Comparative Example, whereas the average value was 0.37 mm in the present invention, which was 44% lower than that in the Conventional Example and 13% lower than that in the Comparative Example. The maximum value of the deformation amount of the battery pack 5 at the position in the vehicle length direction (other than A in FIG. 6) where the floor cross member 7 and the ground side cross member 9 were not disposed was 4.73 mm in the Conventional Example and 1.92 mm in the Comparative Example, whereas the maximum value was 1.41 mm in the present Invention Example, which was 70% lower than that in the Conventional Example and 27% lower than that in the Comparative Example.

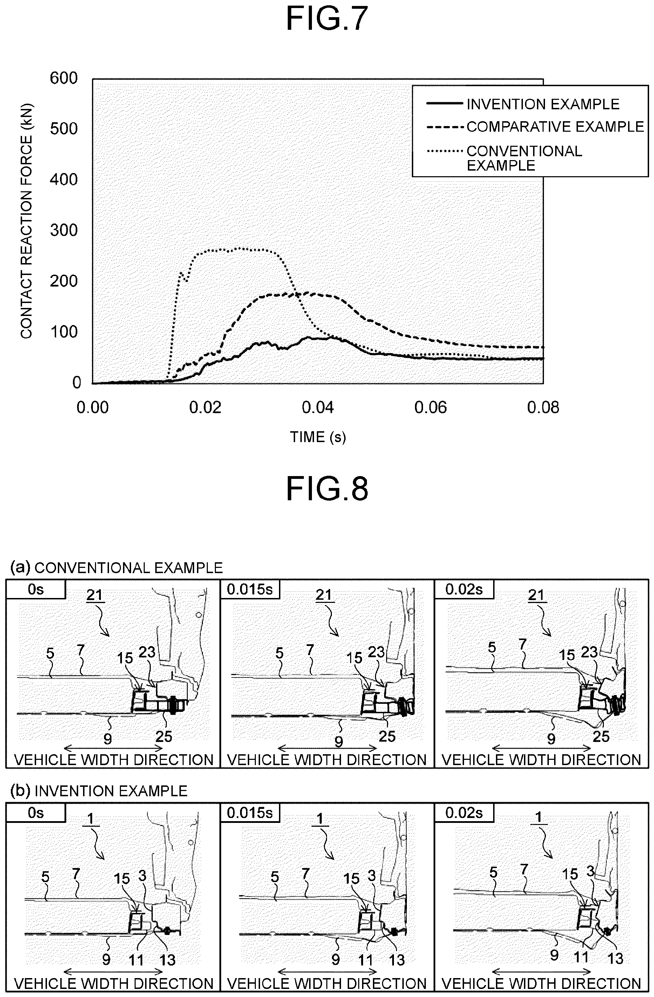

FIG. 7 illustrates an analysis result of a load input to the battery pack 5 at a position of 1568 mm in the vehicle length direction where the floor cross member 7 and the ground side cross member 9 are disposed.

The time for the load input to the battery pack 5 in the Invention Example to reach the peak value is 0.0382 seconds, which is delayed by 0.012 seconds and by 0.0002 seconds, compared with 0.0262 seconds in the Conventional Example and 0.0380 seconds in the Comparative Example, respectively. As a result, the load input to the battery pack 5 in the Invention Example was 92 kN in terms of the peak value, which was significantly reduced as compared with the Conventional Example (peak value: 266 kN) and the Comparative Example (peak value: 179 kN) (650 reduction compared to the Conventional Example and 49% reduction compared to the Comparative Example).

FIG. 8 illustrates a state of deformation of the automotive body side structure 21 of the Conventional Example and the automotive body side structure 1 of the Invention Example at the start of side collision of the vehicle 101 (0.0 s) and during collision (0.15 s and 0.2 s from the start of collision).

In the Conventional Example, as illustrated in FIG. 8(a), the connecting member 25 connected to the battery pack 5 is deformed at 0.015 s, and the connecting member 25 is not completely crushed even at 0.02 s, and the shape at the start of collision remains. Therefore, it can be seen that the load is transferred to the battery pack 5 to be deformed.

On the other hand, in the Invention Example, as illustrated in FIG. 8(b), since the side sill 3 has the recessed portion 13, the side sill 3 is not in contact with the collision energy absorptive parts 11 even at 0.015 s, and the floor cross member 7 and the ground side cross member 9 are connected to the upper and lower sides of the side sill 3. This suggests that the load input to the side sill is transferred to the floor cross member 7 and the ground side cross member 9 to absorb the collision energy.

Further, when the side collision progresses, at 0.02 s after the side sill 3 comes into contact with the collision energy absorptive parts 11, the collision energy absorptive parts 11 are substantially crushed, but the battery frame assembly 15 is not deformed. From this, it can be seen that the collision energy absorptive parts 11 absorb the collision energy, thereby reducing the load input to the battery pack 5 (battery frame assembly 15) and suppressing the deformation of the battery pack 5.

As described above, according to the automotive body side structure of the present invention, the timing at which the side sill comes into contact with the battery pack is delayed by the space secured between the collision energy absorptive parts and the side sill, the load of the floor cross member can be transferred until the side sill comes into contact with the battery pack, and after the side collision progresses and the side sill comes into contact with the collision energy absorptive parts, the collision energy absorptive parts can absorb the collision energy. As a result, it was found that the battery pack is protected from damage by reducing and suppressing deformation of a load input to the battery pack, and the present invention is suitable as an automotive body side structure of a battery powered vehicle or the like.

### Industrial applicability

According to the present invention, it is possible to provide an automotive body side structure capable of reducing a load and deformation input to a battery pack due to deformation of a side sill at a time of a side collision of a battery powered vehicle or the like.

### Reference Signs List

1 AUTOMOTIVE BODY SIDE STRUCTURE
3 SIDE SILL
3a SIDE SILL INNER
3b SIDE SILL OUTER
5 BATTERY PACK
5a BATTERY PACK UPPER
5b BATTERY PACK LOWER
7 FLOOR CROSS MEMBER
7a END PORTION
9 GROUND SIDE CROSS MEMBER
9a END PORTION
11 COLLISION ENERGY ABSORPTIVE PARTS
13 RECESSED PORTION
15 BATTERY FRAME ASSEMBLY
17 BOLT
21 AUTOMOTIVE BODY SIDE STRUCTURE
23 SIDE SILL
23a SIDE SILL INNER
23b SIDE SILL OUTER
25 CONNECTING MEMBER
31 AUTOMOTIVE BODY SIDE STRUCTURE
33 SIDE SILL
33a SIDE SILL INNER
33b SIDE SILL OUTER
101 VEHICLE
103 POLE

## Claims

1. An automotive body side structure comprising:
a side sill disposed at a vehicle outside in a vehicle width direction of a vehicle body and extending in a vehicle length direction;
a battery pack disposed at a lower part of the vehicle body vehicle inside in the vehicle width direction relative to the side sill; and
a floor cross member extending in the vehicle width direction and having a vehicle outside end portion in the vehicle width direction connected to the side sill, wherein
a steel sheet used for the side sill has a tensile strength of 980 MPa-class or higher,
the automotive body side structure includes
collision energy absorptive parts provided in a protruding shape toward the vehicle outside in the vehicle width direction on an outer peripheral side in the vehicle width direction of the battery pack, the collision energy absorptive parts being configured to absorb collision energy when a collision load is input to the side sill from the vehicle outside in the vehicle width direction, and
a recessed portion having a recessed shape at a vehicle inner side of the side sill in the vehicle width direction, the recessed shape being recessed toward the vehicle outside in the vehicle width direction in accordance with a protruding shape of the collision energy absorptive parts so as to secure a space between the collision energy absorptive parts and the side sill,
the collision energy absorptive parts and the recessed portion are provided along the side sill over an entire length of or a partial length of the vehicle length direction, and
when a collision load is input to the side sill from the vehicle outside in the vehicle width direction, the space between the side sill and the battery pack delays a timing at which the side sill and the collision energy absorptive parts come into contact with each other, and before the side sill and the collision energy absorptive parts come into contact with each other, the collision load input to the side sill is transferred to the floor cross member, and after the side sill and the collision energy absorptive parts come into contact with each other, the collision energy absorptive parts absorb the collision energy to reduce a load transferred to the battery pack.

2. The automotive body side structure according to claim 1, wherein the recessed portion is formed in a region of 1/2 or less of the side sill in a vehicle body height direction at a vehicle inner side in the vehicle width direction.

3. The automotive body side structure according to claim 1 or 2, wherein the recessed portion has a depth of 50 mm or less in the vehicle width direction.
